# EUROPÄISCHE PATENTSCHRIFT

(11) **EP 0 752 427 B1**
(45) Veröffentlichungstag und Bekanntmachung des Hinweises auf die Patenterteilung: **01.09.1999**
(21) Anmeldenummer: 96110038.5
(22) Anmeldetag: 21.06.1996
(51) Int. Cl.: C08F 2/38, C08F 2/22, C08L 33/14

(54) **Verfahren zur Herstellung von verzweigten Polymerisaten**
Polymerisation process for branched polymers
Procédé de préparation de polymères ramifiés

(30) Priorität: 01.07.1995 DE 19524053
(43) Veröffentlichungstag der Anmeldung: 08.01.1997
(73) Patentinhaber: Röhm GmbH, 64293 Darmstadt (DE)
(72) Erfinder: Pfirmann, Martina, Dr., 64347 Griesheim (DE); Siol, Werner, Dr., 64297 Darmstadt (DE); Koralewski, Klaus, 64560 Riedstadt (DE); Wicker, Michael, Dr., 64342 Seeheim-Jugenheim (DE)

(56) Entgegenhaltungen:
- EP-A- 0 520 668
- WO-A-94/04575
- C. BONNANS-PLAISANCE ET AL.: "Polymères thiocarboxyliques, 4a) Synthèse de poly(N,N-diéthyl-méthacrylthioamide-co-sty rène) et poly(dithiométhacrylate d'éthyle-co-styrène)" MAKOMOL. CHEM. RAPID COMMUN., Bd. 6, 1985, Seiten 145-148, XP002046079

## Beschreibung

### Gebiet der Erfindung

Die Erfindung betrifft ein Verfahren zur Herstellung verzweigter Polymerisate P durch eine wenigstens zweistufige Polymerisation von Monomeren M₁ und M₂, gegebenenfalls in Gegenwart von inerten, nicht-wäßrigen Lösungsmitteln L, bei dem in der ersten Stufe ein Merkaptan RM mit einer olefinischen, radikalisch polymerisierbaren Doppelbindung als Molekulargewichtsregler eingesetzt wird, sowie Verwendungen solchermaßen hergestellter Polymerisate P.

### Stand der Technik

Verzweigte Polymerisate, insbesondere Kammpolymere, werden im allgemeinen durch die Polymerisation von Makromonomeren gegebenenfalls mit weiteren Monomeren hergestellt.

Definitionsgemäß stellen Makromonomere Polymere mit einer polymerisationsfähigen, insbesondere einer radikalisch polymerisierbaren Endgruppe mit mittleren Molekulargewichten M_{w} von 500 bis etwa 10⁵ Dalton, insbesondere von 2000 bis 5 x 10⁴ Dalton dar (zur Bestimmung von M_{w} siehe beispielsweise H.F. Mark et.al., Encyclopedia of Polymer Science and Technology, 2nd. Ed. Vol., 10, Seiten 1 bis 19, J. Wiley, New York, 1989).
Die Herstellung von Makromonomeren wird in der Literatur eingehend beschrieben (vgl. beispielsweise P.F. Rempp, E. Franta, Adv. Polym. Sci. 58, 1 (1984); K. Albrecht, W. Wunderlich, Angew. Makromol. Chem. 145/146, 89 - 100 (1986); H.F. Mark et al. Encyclopedia of Polymer Science and Technology, 2nd. Ed., Vol. 9, Seiten 195 - 204, J. Wiley (1989); T. Corner, Adv. Polym. Sci. 62, 95 - 141 (1984); P. Rempp und E. Franta, Adv. Polym. Sci. 58, 1-50 (1984), DE-PS 27 23 905 oder US-PS 3,390,206).
Makromonomere sind bekanntlich über anionische und kationische "lebende Polymerisation" bzw. über radikalische Polymerisation zugänglich, wobei die polymerisationsfähige Endgruppe gewöhnlich bei Initiierung oder beim Kettenabbruch eingeführt wird, bzw. durch eine nachfolgende chemische Umsetzung. Eine weitere Möglichkeit zur Herstellung von Makromonomeren bietet die "Group Transfer Polymerisation" (GTP: vgl. beispielsweise H.F. Mark et al., Encyclopedia of Polymer Science and Technology, 2nd. Ed., Vol., 10, Seiten 1 - 19, J. Wiley, 1989).
Ein Verfahren zur Herstellung von Kammpolymeren auf Acrylatbasis, die Elastomere bilden, wird beispielsweise in DE-A 39 02 653 beschrieben, wobei die Kammpolymeren zu 95 bis 50 Gew.-% aus Acrylatmonomeren und zu 5 bis 50 Gew.-% aus Makromonomeren aufgebaut sind, bestehend aus einer Polyvinyleinheit mit einer vinylischen Endgruppe, wobei die Polyvinyleinheit aus Monomereinheiten ausgewählt aus der Gruppe der Acrylate, der Methacrylate und der gegebenenfalls substituierten Styrole besteht, sowie eine Glasübergangstemperatur T_{g} von mindestens 60 Grad C und ein mittleres Molekulargewicht von 500 bis 10⁵ Dalton aufweist.
EP-A 357 036 umfaßt ein Verfahren zur Herstellung von Kammpolymeren, wobei Makromonomere mit vinylischen Endgruppen und mittleren Molekulargewichten zwischen 3000 und 50000 Dalton mit Vinylmonomeren und einem Polymerisationsinitiator in einem Lösungsmittel gemischt werden, das die Makromonomeren gut löst und eine Löslichkeit in Wasser von mehr als 10 Gew.-% bei 30 Grad C aufweist, und wobei man die resultierende Mischung der wäßrigen Suspensionspolymerisation unterwirft.
In DE-A 40 10 893 wird ein Verfahren zur Herstellung von Acrylelastomeren beschrieben, wobei Alkylacrylate und Alkoxyalkylacrylate in Gegenwart eines organischen Peroxids mit einer nichtkonjugierten Doppelbindung als Polymerisationsinitiator sowie in Gegenwart von schwefelhaltigen Molekulargewichtsreglern mit nichtkonjugierten Doppelbindungen polymerisiert werden.
In EP-A 520 668 wird ein zweistufiges Verfahren in wäßriger Emulsion zur Herstellung von verzweigten Polymerisaten beschrieben, wobei in der ersten Stufe Makromonomere mit endständigen Vinylgruppen duch die Polymerisation von ethylenisch ungesättigten Monomeren in Gegenwart von Merkaptanen mit olefinischen Gruppen gebildet werden, die in der zweiten Stufe mit weiteren ethylenisch ungesättigten Monomeren zu verzweigten Copolymerisaten umgesetzt werden.

### Aufgabe und Lösung

Die Verfahren des Standes der Technik zur Herstellung von verzweigten Polymerisaten, die Makromonomer-Einheiten als Comonomer-Einheiten aufweisen, umfassen zumeist die separate Herstellung und die Isolierung der Makromonomeren, bevor diese durch Polymerisation, gegebenenfalls mit weiteren Monomeren, zu den verzweigten Endprodukten umgesetzt werden.
Die EP-A 520 668 bietet zwar ein Verfahren zur Herstellung verzweigter Polymerisate durch die Copolymerisation von Makromonomeren mit weiteren Monomeren, bei dem die intermediär hergestellten Makromonomeren anschließend direkt weiter polymerisiert werden. Dieses Verfahren birgt den Nachteil, daß es in wäßriger Emulsion durchgeführt wird. Dies zieht je nach Einsatzgebiet der verzweigten Polymerisate eine ziemlich aufwendige Aufarbeitung der resultierenden Polymerdispersion zur Entfernung der Polymeremulgatoren nach sich. Insbesondere gilt dies für den Einsatz der verzweigten Polymerisate als thermoplastische Elastomere mit hoher Transparenz.
Weiterhin beschränkend bei der EP-A 520 668 ist, daß nach dem dort beschriebenen Verfahren fast ausschließlich Kammpolymerisate hergestellt werden können, bedingt durch den Reaktivitätsunterschied zwischen der ungesättigten Gruppe der für die Herstellung der Makromonomeren verwendeten Monomeren und der olefinischen Gruppe der als Molekulargewichtsregler eingesetzten Merkaptane, die den Einbau der Merkaptane über die Polymerisation der ungesättigten Gruppe in die Makromonomeren praktisch verhindert.
Daraus resultierte die Aufgabe, ein Verfahren zur Herstellung von verzweigten Polymerisaten bereitzustellen, das in seiner Durchführung einfach ist und eine leicht zu bewerkstelligende Isolierung der verzweigten Polymerisate erlaubt.

Überraschenderweise wurde gefunden, daß verzweigte Polymerisate P mit besonderen Eigenschaften durch folgendes zweistufiges Verfahren hergestellt werden können:
In einer ersten Stufe werden 10 bis 500 Gew.-Teile mindestens eines Monomeren M₁ in Gegenwart von 0,1 bis 20 Gew.-Teilen eins Merkaptans RM mit einer olefinischen, radikalisch polymerisierbaren Doppelbindung und gegebenenfalls in Gegenwart von 0 bis 100 Gew.-Teilen eines nicht-wäßrigen Lösungsmittels L unter Verwendung von mindestens einem Polymerisationsinitiator PI polymerisiert,
wobei die polymerisierbaren Doppelbindungen des Monomeren M₁ und des Merkaptans RM eine vergleichbare Reaktivität aufweisen und wobei das Monomere M₁, das Merkaptan RM sowie das sich bildende Copolymere MM₁ aus RM und M₁ vollständig im gegebenenfalls anwesenden nicht-wäßrigen Lösungsmittel L bzw. im Monomeren M₂ löslich sind.
In der zweiten Stufe wird dem Reaktionsgemisch der ersten Stufe 20 bis 1000 Gew.-Teile mindestens eines, gegebenenfalls von M₁ verschiedenen, Monomeren M₂ gegebenenfalls gemeinsam mit 10 bis 1000 Gew.-Teilen nicht-wäßrigem Lösungsmittel L zugegeben und in Gegenwart von 0,01 bis 10 vorzugsweise 0,01 - 5, Gew.-Teilen eines gesättigten Molekulargewichtsreglers GM sowie unter Verwendung von Polymerisationsinitiatoren PI polymerisiert. Vorzugsweise sind die Monomeren M₁ und M₂ Acryl- oder Methacrylverbindungen der Formel I: 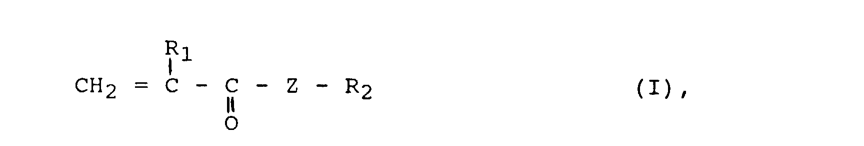 wobei
- R₁: für Wasserstoff oder Methyl,
- R₂: für ggfs. substituierte Alkyl-, Aryl- oder Cycloalkylgruppen mit 1 bis 30 Kohlenstoffatomen, sowie
- Z: für O, NH oder NR₂
stehen können.
Das resultierende verzweigte Polymerisat P weist einen hohen Verzweigungsgrad auf, ausgedrückt durch einen vergleichsweise niedrigen Trägheitsradius der Polymermoleküle bei relativ hohem Molekulargewicht, und kann beispielsweise als Viskositätsindex-Verbesserer in Schmierölen, als Rohstoff für Lacke oder Klebstoffe, als thermoplastisches Elastomeres verwendet werden, sowie als Additive für Polymerisate oder Polymerisatmischungen.

Bevorzugt ist eine direkte Abfolge der beiden Reaktionsstufen, besonders bevorzugt im gleichen Reaktionsgefäß.
Weiterhin bevorzugt ist ein Verfahren, bei dem die Synthese des Reglermonomeren (Merkaptans) RM erst unmittelbar vor der Durchführung der oben beschriebenen Reaktionsstufen erfolgt. Vorteilhaft liegen die Übertragungskonstanten C der Reglermonomeren RM bezüglich der zu polymerisierenden Monomeren M₁ im Bereich zwischen 0,1 und 20, besonders vorteilhaft zwischen 0,4 und 2. Die polymerisierende Gruppe der Reglermonomeren RM sollte bezüglich der Monomeren M₁ einen r-Parameter im Bereich zwischen 0,1 und 10, vorzugsweise zwischen 0,2 und 3 aufweisen (zur Definition der Übertragungskonstanten und der r-Parameter vgl. beispielsweise: J. Brandrup, E.H. Immergut, Polymer Handbook, 3rd. Ed., Seiten II/81 bis 152 bzw. Seiten II/153 - 266; J. Wiley, New York, 1989).

### Durchführung der Erfindung

### Die erste Reaktionsstufe

Die Monomeren M₁ werden unter Zusatz von Reglermonomeren RM polymerisiert, wobei man sich vorteilhafterweise der radikalischen Polymerisation bedient (vgl. hierzu beipsielsweise H. Rauch-Puntigam, Th. Völker, "Acryl- und Methacrylverbindungen", Springer, Berlin, New York, 1967). Als Polymerisationsinitiatoren PI werden vorzugsweise Radikalbildner eingesetzt, aus denen die Starterradikale durch thermische Spaltung freigesetzt werden, besonders vorzugsweise Azoverbindungen und/oder Peroxid-Verbindungen. Beispielhaft für Azoverbindungen seien genannt: 1,1'-Azobis-(cyclohexan-1-nitril), 2,2'-Azobis-(ethylisobutyrat), 4,4'-Azobis-(4-cyanovaleriansäure), 2,2'-Azobis-(isobutyrhydrazid), Azobis-(isobutanol), 2,2'-Azobis-(2,4-dimethylvaleronitril) oder bevorzugt 2,2'-Azobis-(isobutyronitril). Als Peroxidverbindungen seien beispielhaft genannt:
Dicyclohexylperoxid, Cumolhydroperoxid, t-Butylperbenzoat, t-Butylperpivalat, t-Butylperisononanoat, Dibenzoylperoxid, Diisopropylperoxydicarbonat, Dilauroylperoxid, 2,2-Bis-(t-Butylperoxy)butan, t-Butylhydroperoxid, t-Amylperneodecanoat, t-Amylperoctoat, t-Amylperpivalat oder bevorzugt t-Butylperneodecanoat.
Als Lösungsmittel L, die die Monomeren M₁, die Reglermonomeren RM und die sich bildenden Makromonomeren MM₁, die durch die Reglermonomeren RM terminiert sind, vollständig lösen, werden im allgemeinen inerte, nicht-wäßrige Lösungsmittel mit einem Siedepunktsbereich zwischen 50 und 200 Grad C, vorzugsweise zwischen 80 und 150 Grad C eingesetzt. Die Lösungsmittel L weisen im allgemeinen Übertragungskonstanten C von weniger als 10⁻³ auf. Beispiele für Lösungsmittel L sind: Aceton, alkylierte Benzole, wie Toluol, oder bevorzugt Butylacetat.
Gegebenenfalls kann auf das Lösungsmittel L ganz verzichtet werden. Dies gilt insbesondere dann, wenn die Monomeren M₁ und M₂ in der ersten und zweiten Polymerisationsstufe chemisch identisch sind, wenn es also beispielsweise darum geht, ein Polybutylmethacrylat-Polymerisat mit langen Polybutylmethacrylat-Seitenketten herzustellen. Solche Polymerisate finden vor allem als kurz abreißende Verdickungsmittel Interesse.
Auf den Einsatz von Lösungsmittel L kann auch immer dann verzichtet werden, wenn die Monomeren M₁ und M₂ verträgliche Homo- oder Copolymerisate bilden. Besonders bevorzugt ist dabei der Fall, daß das aus M₁ gebildete Polymerisat P1 und das aus M₂ gebildete Polymerisat P2 verträgliche Mischungen mit UCST (Upper Critical Solution Temperature)-Verhalten ausbilden. Zum UCST-Verhalten vgl. beispielsweise D.R. Paul, Polymer Blends and Mixtures, Martinus Nijhoff Publishers, Dordrecht, Boston, 1985.
Die verwendeten Monomeren M₁ sind vorzugsweise Acryl- und Methacrylverbindungen der Formel I: 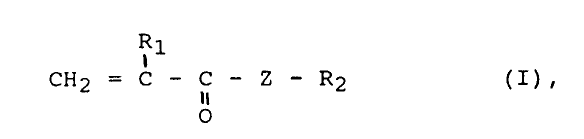 wobei:
- R₁: für Wasserstoff oder Methyl
- R₂: für gfs. substituierte Alkyl-, Aryl- oder Cycloalkylgruppen mit 1 bis 30 Kohlenstoffatomen sowie
- Z: für O, NH, NR₂ oder (O-(CH₂)ₓ)ₘ-O mit x für eine ganze Zahl zwischen 2 und 6 und m für eine ganze Zahl zwischen 1 und 50
stehen können,
bzw. Mischungen aus verschiedenen Monomeren M₁.

Beispielhaft für Alkyl(meth)acrylverbindungen seien genannt: Methyl(meth)acrylat, Ethyl(meth)acrylat, Butyl(meth)acrylat, Octyl(meth)acrylat, Dodecyl(meth)acrylat, Hexadecyl(meth)acrylat, Eicosyl(meth)acrylat, (Meth)acrylamid, N-Methyl(meth)acrylamid, N,N-Dimethyl(meth)acrylamid, N-t-Butyl(meth)acrylamid, Hydroxymethyl(meth)acrylat, 2-Hydroxyethyl(meth)acrylat, 2-Methoxyethyl(meth)acrylat, 2-Butoxyethyl(meth)acrylat, 2-Methylethyl(meth)acrylat, 2-Ethylhexyl(meth)acrylat, 2,2,3,3-Tetrafluorpropyl(meth)acrylat, 6-Chlorhexyl(meth)acrylat, (Meth)acrylsäureester von ethoxylierten Fettalkoholen mit 5 bis 25 Ethylenglycol-Einheiten sowie (Meth)acrylsäureester von Nonylphenoxypolyethylenglycol mit 5 bis 40 Ethylenglycol-Einheiten.
Beispiele für Aryl(meth)acryl-Verbindungen sind Phenyl(meth)acrylat, l-Phenylethyl(meth)acrylat, Benzyl(meth)acrylat, N-Phenyl(meth)acrylamid, N-Benzyl(meth)acrylamid, 4-Hydroxyphenyl(meth)acrylat, Naphtyl(meth)acrylat, 9-Fluorenyl-Naphtyl(meth)acrylat, sowie Pentafluorphenyl(meth)acrylat.
Beispielhaft für Cycloalkyl(meth)acryl-Verbindungen werden angeführt: Cyclopentyl(meth)acrylat, Cyclohexyl(meth)acrylat, Cyclooctyl(meth)acrylat, 3,3,5-Trimethylcyclohexyl(meth)acrylat, 3-Cyclohexylpropyl(meth)acrylat, N-Cyclohexyl(meth)acrylamid, 4-Hydroxycyclohexyl(meth)acrylat oder 4-Fluorcyclohexyl(meth)acrylat.
Als Reglermonomere RM werden Merkaptane mit einer ethylenisch ungesättigten, radikalisch polymerisierbaren Gruppe eingesetzt.
Bevorzugt werden Alkyl(meth)acrylverbindungen oder Alkylmaleinimid-Verbindungen mit einer Merkaptogruppe am Alkylrest eingesetzt. Beispiele für Alkyl(meth)acrylverbindungen RM sind vorzugsweise 2-Merkaptoalkyl(meth)acrylate oder ω-Merkapto(meth)acrylamide wie 3-Merkaptopropyl(meth)acrylat, 6-Merkaptohexyl(meth)acrylat, 8-Merkaptooctyl(meth)acrylat, 11-Merkaptoundecyl(meth)acrylat, 4-Merkaptobutyl(meth)acrylamid sowie besonders vorzugsweise 2-Merkaptoethyl(meth)acrylat. Als Beispiele für Alkylmaleinimidverbindungen seien angeführt 3-Merkaptopropylmaleinimid, 6-Merkaptohexylmaleinimid, 11-Merkaptoundecylmaleinimid sowie bevorzugt 2-Merkaptoethylmaleinimid.

Bezüglich der Monomeren M₁, die gemeinsam mit den Reglermonomeren RM intermediär die Makromonomeren MM₁ bilden, weisen die Reglermonomeren Übertragungskonstanten C_{ü} im Bereich zwischen 0,1 bis 20, vorzugsweise zwischen 0,4 und 2 auf (zur Bestimmung und Definition der Übertragungskonstanten vgl. beispielsweise J. Brandrup, E.H. Immergut, Polymer Handbook, 3rd. Ed., Seiten II/81 bis 152, J. Wiley, New York. 1989). Die polymerisierende olefinische Doppelbindung der Reglermonomeren RM weist bezüglich der Monomeren M₁ einen r-Parameter im Bereich zwischen 0,1 und 10, vorzugsweise zwischen 0,2 und 3 auf (zur Bestimmung und Definition der r-Parameter vgl. beispielsweise: J. Brandrup, E.H. Immergut, Polymer Handbook, 3rd. Ed., Seiten II/153 bis 266, J. Wiley, New York, 1989).
Die erste Reaktionsstufe wird in einem geeigneten, mit Rührer und Heizvorrichtung ausgestatteten Reaktor durchgeführt, vorzugsweise unter einem an sich üblichen Schutzgas wie Stickstoff oder Argon. Vorgelegt werden gegebenenfalls 0 bis 100 Gew.-Teile Lösungsmittel L, dem gleichzeitig oder nachfolgend 10 bis 500 Gew.-Teile, vorzugsweise 20 bis 300 Gew.-Teile Monomere M₁ oder Mischungen aus verschiedenen Monomeren M₁ sowie 0,1 bis 20 Gew.-Teile, vorzugsweise 0,2 bis 5 Gew.-Teile des Regler-monomeren RM hinzugefügt werden. Mit den an sich üblichen Mengen an Polymerisationsinitiatoren PI, beispielsweise 0,001 bis 2 Gew.-% bezogen auf die Monomeren M₁, wird die Polymerisation unter Erwärmen, beispielsweise auf 50 bis 100 Grad C gestartet und über einen gewissen Zeitraum, beispielsweise 1 bis 10 Stunden, polymerisiert. Der Umsatz an Monomeren M₁ und Reglermonomeren RM beträgt im allgemeinen in der ersten Reaktionsstufe zwischen 50 und 95 %, bezogen auf die eingesetzte Menge an M₁ und RM.

### Die zweite Reaktionsstufe

Das in der ersten Reaktionsstofe gebildete Gemisch aus Copolymeren MM₁ aus RM und M₁ mit und ohne endständige Doppelbindungen (Polymere mit Merkapto-Gruppen) aus den verbleibenden Monomeren M₁ und RM im Lösungsmittel L wird vorzugsweise im gleichen Reaktor mit Monomeren M₂ umgesetzt.
Ebenso wie die Monomeren M₁ sind die dabei verwendeten Monomeren M₂ vorzugsweise Acryl- oder Methacrylverbindungen der Formel I, wie oben beschrieben. Weiterhin können als Monomere M₂ Mischungen aus verschiedenen Monomeren eingesetzt werden, bevorzugt Mischungen aus Monomeren der Formel I.
Für die Erfindung von Bedeutung ist das Verhältnis der Übertragungskonstanten C_{ü} von Reglermonomeren RM zum Monomeren M₁ bzw. von RM zum Monomeren M₂ unter Berücksichtigung der r-Parameter von RM und M₁ bzw. M₂. So wird bei einer niedrigen Übertragungskonstante C_{ü} von beispielsweise 0,1 und r-Parametern für RM bzw. M₁ von jeweils < 1, beispielsweise von jeweils 0,4, das Reglermonomere zu Beginn der Reaktion sehr schnell verbraucht unter Ausbildung von alternierenden Copolymeren (RM-M₁)ₙ. In der Folge werden dann über die SH-Gruppen der Reglermonomeren Polymeräste aus den Monomeren M₁ und später M₂ aufpolymerisiert und man erhält sternförmige Polymere. Dies wird gefördert durch hohe Anteile an Monomeren M₂ bezogen auf die Monomeren M₁ und einen hohen Anteil an Reglermonomeren RM bezogen auf M₁. Besonders gut erfolgt die Anbindung der Polymerkette aus M₂ an die Copolymeren aus M₁ und RM, wenn die Übertragungskonstante C_{ü} von RM zu M₂ groß ist, z.B. C_{ü} = 15. Solche hohen Übertragungskonstanten resultieren beispielsweise bei der Verwendung von Vinylaromaten, wie z.B. Vinyltoluol, α-Methylstyrol oder vorzugsweise Styrol als Monomerkomponente M₂.

Umgekehrt erhält man mit r-Parametern r_{RM} < 1 und r_{M1} > 1 in der ersten Stufe bei C_{ü} > 0,5 vor allem unverzweigte Makromonomere, die in der zweiten Stufe mit M₂ copolymerisieren.
In einigen Fällen, insbesondere bei der Herstellung verzweigter Polymerisate mit bestimmten rheologischen Eigenschaften, wie beispielsweise Viskositätsindex-Verbesserer oder Verdickungsmittel, sind die Monomeren M₁ und M₂ identisch. Bevorzugt ist allerdings der Fall nicht identischer Monomere M₁ und M₂, wobei als Unterscheidungskriterien beispielsweise die unterschiedliche Glastemperatur von Polymerisaten, die aus M₁ einerseits und M₂ andererseits gebildet werden, oder die unterschiedliche Hydrophilie der Monomeren M₁ und M₂ zur Anwendung kommen können. So wird beispielsweise die Herstellung von thermoplastischen Elastomeren möglich, wenn z.B. als Monomeres M₁ Methylmethacrylat und als Monomeres M₂ Butylacrylat eingesetzt wird. Weiterhin können Motorölzusätze mit guter Öllöslichkeit und guter Dispergierwirkung für Motoröle hergestellt werden, wenn z.B. als Monomeres M₁ Alkyl(meth)acrylate mit Alkylgruppen, die 6 bis 30 Kohlenstoffatome aufweisen und als Monomere M₂ Hydroxy(meth)acrylate, Alkyl(meth)acrylamide und/oder (Meth)acrylate von ethoxylierten Fettalkoholen bzw. (Meth)acrylate von ethoxylierten, alkylsubstituierten Phenolen eingesetzt werden.
Vor Beginn der zweiten Reaktionsstufe werden gegebenenfalls dem in der ersten Reaktionsstufe gebildeten Gemisch aus Copolymere MM₁ aus RM und M₁, aus den verbleibenden Monomeren M₁ und RM sowie gegebenenfalls aus Lösungsmittel L weitere 10 bis 1000 Gew.-Teile Lösungsmittel L hinzugefügt. Vorzugsweise erfolgt diese Zugabe im selben Reaktor, in dem auch die erste Reaktionsstufe durchgeführt wird.

Nach der Zugabe von 20 bis 1000 Gew.-Teilen Monomerem M₂ gegebenenfalls im Lösungsmittel L sowie 0,005 bis 2 Gew.-Teile, vorzugsweise 0,01 bis 0,5 Gew.-Teile eines gesättigten Merkaptans GM als Molekulargewichtsregler zugegeben und die Polymerisation nach Zusatz von weiterem Polymerisationsinitiator in an sich üblichen Mengen, beispielsweise 0,001 bis 2 Gew.-% bezogen auf die Monomeren M₂, fortgeführt. Als gesättigte Molekulargewichtsregler GM können beispielsweise verwendet werden: Thioglycolsäure, 2-Merkaptoethanol, 2-Ethylhexylthioglycol, Butylthioglycolat, Octylthioglycolat, n-Butylmerkaptan, n-Dodecylmerkaptan, tert.-Dodecylmerkaptan oder Methyl-3-merkaptopropionat.
Wiederum wird vorzugsweise unter einem an sich üblichen Schutzgas, wie beispielsweise Stickstoff oder Argon, bei den an sich üblichen Temperaturen, beispielsweise zwischen 50 und 100 Grad C polymerisiert.
Nach Abschluß der Polymerisation in der zweiten Reaktionsstufe liegt der Endumsatz bezogen auf die Monomeren M₁ und M₂, die Copolymeren MM₁ sowie die Reglermonomeren RM bei mindestens 90 %, vorzugsweise bei mindestens 95 %.

Die gebildeten verzweigten Polymerisate P können aus dem Reaktionsgemisch beispielsweise durch Ausfällen mit geeigneten Fällungsmitteln, wie z.B. Methanol, durch Abdestillieren des Lösungsmittels L sowie der nicht umgesetzten niedermolekularen Bestandteile oder durch Entgasen in einem Entgasungsextruder isoliert werden, sofern die Polymerisation nicht direkt in Substanz, beispielsweise in Form einer Perlpolymerisation zu Ende geführt wird. In diesem Fall erfolgt die Isolierung der verzweigten Polymerisate P durch Abfiltrieren der Perlen und nachfolgendes Waschen der Perlen mit Wasser.

### Vorteilhafte Wirkungen der Erfindung

Die verzweigten Polymerisate P eignen sich hervorragend als thermoplastische Elastomere (TPE), wenn die Monomeren M₁ Polymere mit Glasübergangstemperaturen von mehr als 50 Grad C und die Monomeren M₂ Polymere mit Glasübergangstemperaturen von weniger als 0 Grad C bilden (zur Bestimmung der Glastemperatur vgl. beispielsweise A. Turi, "Thermal Characterization of Polymeric Materials", Seiten 169 ff, Academic Press, New York, 1981). Solche thermoplastischen Elastomere aus verzweigten Polymerisaten P weisen hohe Reißdehnungen bei vergleichsweise hohen Reißspannungen auf.
Die TPE aus Polymerisaten P können noch an sich bekannte Additive wie Stabilisatoren, Verarbeitungshilfsmittel u.ä. in den üblichen Mengen enthalten (vgl. Gaechter-Müller, Kunststoff-Additive, Carl Hanser, München, New. York, 1979; Ullmann's Encyclopedia of Industrial Chemistry, 5th Ed., Vol. A20, Seiten 459 bis 537, Verlag Chemie, Weinheim, New York, 1992).

Folien aus TPE bestehend aus Polymerisat P können beispielsweise zur Herstellung von splitterfreien Verbundglassystemen verwendet werden, indem solche Folien zwischen die zu verbindenden Glasscheiben gelegt und zu einem Verbund verpreßt werden.
Weiterhin lassen sich mit dem erfindungsgemäßen Verfahen Polymerisate P, bei denen die Monomeren M₁ und M₂ identisch sind, herstellen, die,für sich genommen, vergleichsweise niedrige Viskositäten bei hohen Molekulargewichten, bedingt durch ihren extremen Verzweigungsgrad, aufweisen. Von besonderem Interesse ist dies bei Alkylmethacrylat-Formmassen.

Es sei darauf hingewiesen, daß durch das Mengenverhältnis der Monomeren (M₁ + RM) zu M₂ die Morphologie der Polymerisate P in weiten Grenzen variiert werden kann. So findet man bei Einsatz von 10 Teilen (M₂ + RM) in der ersten Stufe, bei einem Anteil von 5 Gew.-% RM bezogen auf M₁, und in der zweiten Stufe nachfolgenden Polymerisation mit 90 Teilen M₂ nahezu sternförmige Polymere, während bei einem großen Anteil von M₁ bezogen auf M₂ eher Kammpolymere erhalten werden.
Bevorzugt sind allerdings Polymerisate P, bei denen, wie im Falle der schon erwähnten TPE, die Monomeren M₁ und M₂ verschieden sind, da mit solchen Polymerisaten P eine größere Anzahl unterschiedlicher Anwendungsgebiete zugänglich ist.
Beispielhaft seien verzweigte Polymerisate P mit Alkyl(meth)acrylaten mit Alkylgruppen mit 6 bis 30 Kohlenstoffatomen als Monomere M₁ sowie mit hydrophilen Monomeren M₂, beispielsweise Hydroxy(meth)acrylate, Alkyl(meth)acrylamide und/oder (Meth)acrylester von ethoxylierten Fettalkoholen, genannt, die als Motorölzusätze mit guter Öllöslichkeit zur Viskositätindexverbesserung und gleichzeitig zur Verbesserung der Dispergierung von Schmutz- und Abriebspartikeln im Motoröl eingesetzt werden können.
Weiterhin existieren noch zahlreiche Anwendungsmöglichkeiten auf dem Lack- und Klebstoffsektor.
Im allgemeinen gilt, daß mit den verzweigten Polymeren P praktisch alle Anwendungsgebiete, die durch die (Co)polymerisation von Makromonomeren erschlossen werden, abgedeckt werden können.

Die folgenden Beispiele dienen zur Erläuterung der Erfindung.
Zur Charakterisierung des Polymerisats P werden folgende Bestimmungsmethoden verwandt:

| | |
|---|---|
| Reißfestigkeit | σ_{R} [MPa] nach DIN 53455 |
| Reißdehnung | ε_{R} [%] nach DIN 53455 |

### BEISPIELE

### Beispiel 1

### Herstellung des verzweigten Polymerisats P in zwei Stufen

Die Herstellung des verzweigten Polymerisats P erfolgt in einem 4-Liter-Reaktor mit Rührer, Rückflußkühler und Thermometer. In der ersten Reaktionsstufe werden im Reaktor zunächst 200 g Methylmethacrylat (Monomer M₁). 100 g Butylacetat (Lösungsmittel L) sowie 10 g einer 40 %igen Lösung von 2-Merkaptoethylmethacrylat (Reglermonomeres PM) in Butylacetat vorgelegt und nach Zusatz von 0,09 g 2,2'-Azobis-(isobutyronitril) als Polymerisationsinitiator PI1 nach dem Dead-End-Verfahren bei einer Temperatur von etwa 90 Grad C während 3 Stunden bis zu einem Umsatz von etwa 65 % polymerisiert und danach 0,5 Stunden bei einer Temperatur von 90 Grad C nachpolymerisiert.
In der zweiten Reaktionsstufe wird dem in der ersten Reaktionstufe erhaltenen Gemisch aus 2-Merkaptoethylmethaacrylat-terminierten Polymethylmethacrylat-Makromonomeren (MM₁), Methylmethacrylat (M₁) und 2-Merkaptoethylmethacrylat 1000 g Butylacetat (L), 390 g Butylacrylat (M₂) sowie 1,8 g tert.-Butylperneodecanoat als Polymerisationsinitiator PI2 und 0,18 g Dodecylmerkaptan als Molekulargewichtsregler zugefügt und bei 60 Grad C während 8 Stunden bis zu einem Umsatz von 97 % polymerisiert.
Das verzweigte Polymerisat P wird als glasklare Folie, nach Ausgießen der Polymerlösung und Abdampfen des Lösungsmittels L isoliert.
Die Folie, die praktisch klebfrei ist, weist eine Reißdehnung ε_{R} > 300 % bei einer Reißspannung von σ_{R} > 3MPa auf.

### Beispiel 2

### Herstellung eines Verbundglases mit dem Polymerisat P gemäß Beispiel 1.

Eine etwa 3 mm dicke Folie aus Polymerisat P gemäß Beispiel wird zwischen zwei 6 bzw. 10 mm dicke Scheiben aus Polymethylmethacrylat (Plexiglas ^{R} GS 233) während 10 Minuten bei 180 Grad C und 50 bar zu einem Verbundglassystem verpreßt. In beiden Fällen erhält man ein Verbundglas, das bei Schlagbeanspruchung nicht splittert.

## Patentansprüche

1. Verfahren zur Herstellung verzweigter Polymerisate P durch radikalische Polymerisation von Monomeren in zwei Stufen
dadurch gekennzeichnet,
daß in der ersten Stufe 10 bis 500 Gew.-Teile mindestens eines Monomeren M₁ in Gegenwart von 0,1 bis 20 Gew.-Teilen eines Merkaptans RM mit einer olefinischen, radikalisch polymerisierbaren Doppelbindung als Molekulargewichtsregler und gegebenenfalls in Gegenwart eines inerten, nichtwäßrigen Lösungsmittels L, das das Monomere M₁, das Merkaptan RM und die sich bildenden Copolymeren MM₁ aus RM und M₁ vollständig löst, unter Verwendung mindestens eines Polymerisationsinitiators PI polymerisiert werden, wobei die polymerisierbaren Doppelbindungen von M₁ und RM eine vergleichbare Reaktivität, ausgedrückt durch Copolymerisationsparameter r zwischen 0,1 und 10, aufweisen, und daß in der zweiten Stufe dem in der ersten Stufe gebildeten Reaktionsgemisch 20 bis 1000 Gew.-Teile Monomeres M₂, gegebenenfalls in inertem, nicht-wäßrigem Lösungsmittel L, sowie 0,01 bis 10 Gew.-Teile eines gesättigten Molekulargewichtsreglers GM zugesetzt werden und daß danach unter Verwendung mindestens eines Polymerisationsinitiators PI polymerisiert wird.

2. Verfahren zur Herstellung verzweigter Polymerisate P gemäß Anspruch 1, dadurch gekennzeichnet, daß die Monomeren M₁ und M₂ identisch sind.

3. Verfahren zur Herstellung verzweigter Polymerisate P gemäß Anspruch 1, dadurch gekennzeichnet, daß die Monomeren M₁ und M₂ verschieden sind.

4. Verfahren zur Herstellung verzweigter Polymerisate P gemäß den Anspruchen 1 bis 3, dadurch gekennzeichnet, daß die Monomeren M₁ und/oder M₂ Acryl- oder Methacrylverbindungen der Formel I sind: 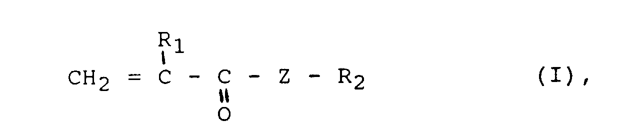 wobei
R₁ für Wasserstoff oder Methyl,
R₂ für gegebenenfalls substituierte Alkyl-, Aryl- oder Cycloalkylgruppen mit 1 bis 30 Kohlenstoffatomen, sowie
Z für O, NH, NR₂ oder (O-(CH₂)ₓ)ₘ-O mit x für eine ganze Zahl zwischen 2 und 6 und m für eine ganze Zahl zwischen 1 und 50
stehen können.

5. Verfahren zur Herstellung verzweigter Polymerisate P gemäß den Ansprüchen 1 bis 4, dadurch gekennzeichnet, daß die beiden Reaktionsstufen in direkter Abfolge im selben Reaktionsgefäß durchgeführt werden.

6. Verfahren zur Herstellung verzweigter Polymerisate P gemäß den Ansprüchen 1 bis 5, dadurch gekennzeichnet, daß die Synthese des Merkaptans RM erst unmittelbar vor der Durchführung der beiden Reaktionsstufen erfolgt.

7. Verfahren zur Herstellung verzweigter Polymerisate P gemäß den Ansprüchen 1 bis 6, dadurch gekennzeichnet, daß das Monomerenpaar M₁ und RM Copolymerisationsparameter r zwischen 0,2 und 3 aufweist.

8. Verfahren zur Herstellung verzweigter Polymerisate P gemäß den Ansprüchen 1 bis 7, dadurch gekennzeichnet, daß die Übertragungskonstanten C_{ü} der Reglermonomeren RM bezüglich der Monomeren M₁ zwischen 0,1 und 20 liegen.

9. Verfahren zur Herstellung verzweigter Polymerisate P gemäß den Ansprüchen 1 bis 8, dadurch gekennzeichnet, daß der Endumsatz an Monomeren M₁ und M₂ nach der zweiten Reaktionsstufe mindestens 95 % bezogen auf die eingesetzten Monomeren M₁ und M₂ beträgt.

10. Verwendung der nach den Verfahren gemäß den Ansprüchen 1 bis 9 hergestellten Polymerisate P als thermoplastische Elastomere, als Schmieröladditive, als Additive für Polymerisate oder Polymerisatmischungen, sowie als Zusätze für Lack- und Klebstoff-Formulierungen.

## Claims

1. A process for the production of branched polymerisate P by radical polymerisation of monomers in two layers, characterised in that in the first layer, 10 to 500 parts by weight of at least one monomer M₁ are polymerised in the presence of 0.1 to 20 parts by weight of a mercaptan RM with an olefinic, radical polymerisable double bond as a molecular weight regulator, and optionally in the presence of an inert, non-aqueous solvent L which completely dissolves the monomer M₁, the mercaptan RM and the copolymers MM₁ which form from RM and M₁, using at least one polymerisation initiator PI, wherein the polymerisable double bonds of M₁ and RM have comparable reactivity, expressed by copolymerisation parameters r between 0.1 and 10, and that in the second stage of the reaction formed in the first stage 20 to 1000 parts by weight of monomer M₂, optionally in inert, non-aqueous solvent L, and 0.01 to 10 parts by weight of a saturated molecular weight regulator GM are added, and that following this, polymerisation takes place using at least one polymerisation initiator PI.

2. A process for the production of branched polymerisate P according to claim 1, characterised in that the monomers M₁ and M₂ are identical.

3. A process for the production of branched polymerisate P according to claim 1, characterised in that the monomers M₁ and M₂ are different.

4. The process for the production of branched polymerisate P according to claims 1 to 3, characterised in that the monomers M₁ and/or M₂ are acryl or methacryl compounds of formula I: 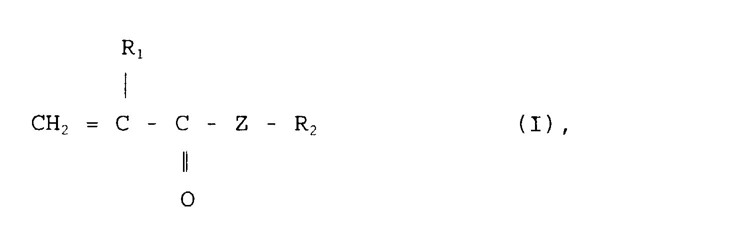 wherein
R₁ denotes hydrogen or methyl,
R₂ denotes optionally-substituted alkyl, aryl or cycloalkyl groups with 1 to 30 carbon atoms, and
Z denotes O, NH, NR₂ or (O-(CH₂)ₓ)ₘ-O where x denotes an integer between 2 and 6 and m denotes an integer between 1 and 50.

5. A process for the production of branched polymerisate P according to claims 1 to 4, characterised in that the two reaction stages are carried out in direct succession in the same reaction vessel.

6. A process for the production of branched polymerisate P according to claims 1 to 5, characterised in that the synthesis of the mercaptan RM first takes place directly before implementation of the two reaction stages.

7. A process for the production of branched polymerisate P according to claims 1 to 6, characterised in that the monomer pair M₁ and RM have copolymerisation parameters r between 0.2 and 3.

8. A process for the production of branched polymerisate P according to claims 1 to 7, characterised in that the transmission constants C_{ü} of the regulator monomers RM lie between 0.1 and 20 with regard to monomer M₁.

9. A process for the production of branched polymerisate P according to claims 1 to 8, characterised in that the end yield of monomer M₁ and M₂ after the second reaction stage is at least 95% with regard to the utilised monomers M₁ and M₂.

10. Use of the polymerisate P produced according to the process according to claims 1 to 9 as thermoplastic elastomers, as lubrication oil additives, as additives for polymerisate or mixtures of polymerisates and as additives for varnish and adhesive formulations.

## Revendications

1. Procédé de fabrication de polymères ramifiés P par polymérisation radicalaire de monomères en deux stades,
caractérisé en ce qu'
au premier stade on polymérise de 10 à 500 parties en poids d'au moins un monomère M₁ en présence de 0,1 à 20 parties en poids d'un mercaptan TM ayant une double liaison polymérisable par voie radicalaire, oléfinique, en tant que régulateur de poids moléculaire, et éventuellement en présence d'un solvant L inerte, non aqueux qui dissout complètement les copolymères MM₁ qui se forment à partir de RM et de M₁, en utilisant au moins un promoteur de polymérisation PI, pour lesquels les double liaisons de polymérisation M₁ et de RM possèdent une réactivité comparable exprimée par le paramètre de copolymérisation (r) entre 0,1 et 10, et en ce qu'au deuxième stade, on ajoute au mélange réactionnel formé au premier stade de 20 à 1000 parties en poids de monomère M₂, éventuellement dans un solvant inerte, non aqueux L ainsi que de 0,01 à 10 parties en poids d'un régulateur de poids moléculaire saturé GM et qu'ensuite on polymérise en utilisant au moins un promoteur de polymérisation PI.

2. Procédé de fabrication de polymère ramifiés P conformément à la revendication 1,
caractérisé en ce que
les monomères M₁ et M₂ sont identiques.

3. Procédé de fabrication de polymère ramifiés P conformément à la revendication 1,
caractérisé en ce que
les monomères M₁ et M₂ sont différents.

4. Procédé de fabrication de polymère ramifiés P conformément aux revendication 1 à 3,
caractérisé en ce que
les monomères M₁ et/ou M₂ sont des composés acryliques ou méthacryliques de formule I : 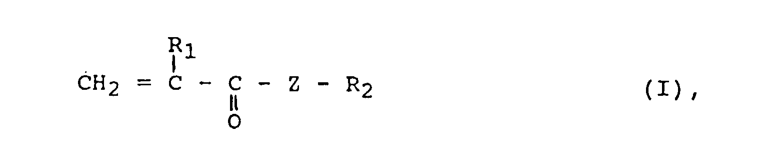 dans laquelle,
R₁ peut représenter de l'hydrogène ou un méthyle,
R₂ peut représenter des groupes alkyle, aryle ou cycloalkyle éventuellement substitués, ayant de 1 à 30 atomes de carbone, ainsi que
Z peut représenter O, NH, NR₂ ou [O-CH₂)x)m]-O
avec x peut représenter un nombre entier entre 2 et 6 et m peut représenter un nombre entier entre 1 et 50.

5. Procédé de fabrication de polymères ramifiés P conformément aux revendications 1 à 4,
caractérisé en ce que
les deux étapes de réaction sont effectuées directement dans la même séquence, dans le même récipient de réaction.

6. Procédé de fabrication de polymères ramifiés P conformément aux revendications 1 à 5,
caractérisé en ce que
la synthèse du mercaptan RM s'effectue d'abord immédiatement avant l'exécution des deux stades de réaction.

7. Procédé de fabrication de polymères ramifiés P conformément aux revendications 1 à 6,
caractérisé en ce que
la paire de monomères M₁ et RM possède un paramètre de copolymérisation (r) compris entre 0,2 et 3.

8. Procédé de fabrication de polymères ramifiés P conformément aux revendications 1 à 7,
caractérisé en ce que
les constantes de transmission C_{ü} des monomères de régulateur RM se situent en ce qui concerne les monomères M₁ entre 0,1 et 20.

9. Procédé de fabrication de polymères ramifiés P conformément aux revendications 1 à 8,
caractérisé en ce que
le rendement final en monomères M₁ et M₂ après le deuxième stade de réaction s'élève au moins à 95 % rapporté aux monomères M₁ et M₂ mis en oeuvre.

10. Utilisation des polymères P produit selon le procédé conformément aux revendications 1 à 9, comme élastomères thermoplastiques, comme additifs pour huiles de graissage, comme additifs pour des polymères ou des mélanges de polymères ainsi que comme additifs pour des formulations de laques ou d'additif.
